# EUROPEAN PATENT APPLICATION

(11) **EP 4 345 780 A1**
(43) Date of publication of application: **03.04.2024**
(21) Application number: 23194441.4
(22) Date of filing: 31.08.2023
(51) Int. Cl.: G07D 11/00, G07D 11/26, G07D 11/40, G07D 11/60

(54) **VALUABLE MEDIUM PROCESSING APPARATUS AND PROCESSING METHOD**

(30) Priority: 28.09.2022 US 202217935998
(71) Applicant: GLORY LTD., Himeji-shi Hyogo 670-8567 (JP)
(72) Inventor: OHNO, Heisuke, Himeji-shi, Hyogo, 670-8567 (JP); NISHINO, Kazuya, Himeji-shi, Hyogo, 670-8567 (JP)
(74) Representative: Epping - Hermann - Fischer

(57) **Abstract**

Provided is a valuable medium processing apparatus including: a plurality of user interfaces each of which comprises a display and an input device; a plurality of maintenance objects; and a controller which sets, at least one user interface to a reception allowable state, causes the at least one user interface in the reception allowable state to display a maintenance screen related to maintenance of the plurality of maintenance objects, sets, a user interface different from the at least one user interface in the reception allowable state to a reception unallowable state, and changes, in a case where the at least one user interface in the reception allowable state receives a change operation for changing the user interface in the reception unallowable state to the reception allowable state, the user interface in the reception unallowable state to the reception allowable state.

## Description

### Technical Field

The present disclosure relates to a valuable medium processing apparatus and a processing method.

### Background Art

A valuable medium processing apparatus that processes various kinds of valuable media such as a banknote, a coin, and a cheque comprises various kinds of devices for processing transactions for various kinds of valuable media to be processed. Such a valuable medium processing apparatus may require various kinds of maintenance.

### Summary

### Solution to Problem

A valuable medium processing apparatus according to the present disclosure comprises: a plurality of user interfaces each of which comprises a display and an input device; a plurality of maintenance objects; and a controller. The controller sets, among the plurality of user interfaces, at least one user interface to a reception allowable state in which reception of an operation to the input device is allowable. The controller causes the at least one user interface in the reception allowable state to display a maintenance screen related to maintenance of the plurality of maintenance objects. The controller sets, among the plurality of user interfaces, a user interface different from the at least one user interface in the reception allowable state to a reception unallowable state in which the operation to the input device is not received The controller changes, in a case where the at least one user interface in the reception allowable state receives a change operation for changing the user interface in the reception unallowable state to the reception allowable state, the user interface in the reception unallowable state to the reception allowable state.

In the valuable medium processing apparatus according to the present disclosure, in a case where the at least one user interface in the reception allowable state receives the change operation, the controller changes the at least one user interface having received the change operation to the reception unallowable state.

In the valuable medium processing apparatus according to the present disclosure, the controller may perform identification of a user on the user interface which has been changed from the reception unallowable state to the reception allowable state. In a case where the identification is successful, the controller allows the user to perform the operation.

In the valuable medium processing apparatus according to the present disclosure, in a case where the at least one user interface in the reception allowable state receives the change operation, the controller may cause the at least one user interface having received the change operation to display identification information for the identification.

The valuable medium processing apparatus according to the present disclosure may further comprise a biometric information acquisition unit that acquires biometric information of the user, wherein the controller performs the identification based on the biometric information.

In the valuable medium processing apparatus according to the present disclosure, the maintenance may be error releasing processing on an error that occurs in the plurality of maintenance objects. The controller may cause a mark to be displayed in the maintenance screen for each of the plurality of maintenance objects. The mark may indicate error occurrence.

In the valuable medium processing apparatus according to the present disclosure, the at least one user interface in the reception allowable state and the user interface in the reception unallowable state may be disposed respectively on sides of the valuable medium processing apparatus, the sides being different from each other. The at least one user interface in the reception allowable state may be disposed on a first side of the valuable medium processing apparatus. The user interface in the reception unallowable state may be disposed on a second side, which is different from the first side, of the valuable medium processing apparatus. The controller may cause the maintenance screen to display a plurality of the marks in distinction from each other. One mark of the plurality of the marks may indicate that an error to be released from a side identical to the side of the at least one user interface in the reception allowable state occurs. Another mark of the plurality of the marks may indicate that an error to be released from a side identical to the side of the user interface in the reception unallowable state occurs.

In the valuable medium processing apparatus according to the present disclosure, the maintenance screen may comprise a plurality of displaying areas assigned for each of the plurality of maintenance objects. The controller may cause the plurality of the marks for each of the plurality of maintenance objects to be displayed on the plurality of displaying areas.

In the valuable medium processing apparatus according to the present disclosure, in a case where an operation corresponding to one of the plurality of displaying areas is received, the controller may cause information to be displayed in the maintenance screen, the information being related to the error releasing processing of one of the plurality of maintenance objects to which the one of the plurality of displaying areas is assigned.

In the valuable medium processing apparatus according to the present disclosure, when the at least one user interface in the reception allowable state receives the change operation, the controller may cause the at least one user interface having received the change operation to perform notification in a case where the error releasing processing on an error has not been completed, the error being an error to be released from a side identical to the side of the at least one user interface having received the change operation.

The valuable medium processing apparatus according to the present disclosure may further comprise a plurality of valuable medium devices each of which handles a valuable medium. The plurality of maintenance objects may be the plurality of valuable medium devices. In a case where an inventory amount of one of the plurality of valuable medium devices becomes uncertain, the controller may cause displaying to be performed in the maintenance screen, the displaying indicating the one of the plurality of valuable medium devices in which the inventory amount becomes uncertain. The one of the plurality of valuable medium devices whose inventory amount is uncertain requires reconciliation after the error is corrected and before the one of the plurality of valuable medium devices is operated again,

In the valuable medium processing apparatus according to the present disclosure, the maintenance may comprise replenishment of the valuable medium to the plurality of valuable medium devices. The maintenance may comprise collection of the valuable medium from the plurality of valuable medium devices. The controller may cause the maintenance screen to display a plurality of options of selecting the replenishment or the collection to be performed.

In the valuable medium processing apparatus according to the present disclosure, the replenishment or the collection of the valuable medium is performable from sides of the valuable medium processing apparatus, the sides being different from each other.The controller may cause the maintenance screen to display a plurality of options of selecting from which of the sides of the valuable medium processing apparatus the replenishment or the collection is performed.

The valuable medium processing apparatus according to the present disclosure further comprises a first valuable medium device and a second valuable medium device, the first valuable medium device handling a first valuable medium, the second valuable medium device handling a second valuable medium whose kind is different from a kind of the first valuable medium, wherein the plurality of maintenance objects comprises the first valuable medium device and the second valuable medium device.

A processing method by the valuable medium processing apparatus according to the present disclosure comprises: setting, among the plurality of user interfaces, at least one user interface to a reception allowable state in which reception of an operation to the input device is allowable; setting, among the plurality of user interfaces, a user interface different from the at least one user interface in the reception allowable state to a reception unallowable state in which the operation to the input device is not received; changing, in a case where a change operation for changing the user interface in the reception unallowable state to the reception allowable state is received via the at least one user interface in the reception allowable state, the user interface in the reception unallowable state to the reception allowable state; and causing the at least one user interface in the reception allowable state to display a maintenance screen related to maintenance of the plurality of maintenance objects.

The processing method according to the present disclosure may further comprise, in a case where the at least one user interface in the reception allowable state receives the change operation, changing the at least one user interface having received the change operation to the reception unallowable state.

In the processing method according to the present disclosure, the valuable medium processing apparatus may further comprise a plurality of valuable medium devices each of which handles a valuable medium, and the plurality of maintenance objects is the plurality of valuable medium devices.

A valuable medium processing apparatus according to the present disclosure comprises: a first user interface which comprises a first display and a first input device; a second user interface which comprises a second display and a second input device; a plurality of maintenance objects; and a controller. The controller sets the first user interface to a reception allowable state in which reception of an operation to the first input device is allowable. The controller causes the first display to display a maintenance screen related to maintenance of the plurality of maintenance objects. The controller sets the second user interface to a reception unallowable state in which the operation to the second input device is not received. The controller changes, in a case where the first user interface receives a change operation for changing the second user interface to the reception allowable state, the second user interface to the reception allowable state.

In the valuable medium processing apparatus according to the present disclosure, in a case where the first user interface receives the change operation, the controller may change the first user interface to the reception unallowable state.

The valuable medium processing apparatus according to the present disclosure may further comprise a plurality of valuable medium devices each of which handles a valuable medium, wherein: the plurality of maintenance objects is the plurality of valuable medium devices.

### Brief Description of Drawings

FIG. 1 is an external view of a valuable medium processing apparatus of the present disclosure when viewed from the front side;
FIG. 2 is an external view of the valuable medium processing apparatus when viewed from the back;
FIG. 3 illustrates an internal structure of a banknote device;
FIG. 4 is a block diagram of the valuable medium processing apparatus;
FIG. 5 illustrates a hardware configuration of the valuable medium processing apparatus;
FIG. 6 is a flowchart illustrating an operation example of the valuable medium processing apparatus;
FIGS. 7A to 7C illustrate a transition example of a screen to be displayed on a rear UI in a case where a maintenance person first logs in by using the rear UI and then changes a reception allowable UI to a front UI;
FIGS. 8A to 8C illustrate a transition example of a screen to be displayed on the front UI in a case where the maintenance person first logs in by using the rear UI and then changes the reception allowable UI to the front UI;
FIG. 9 illustrates an example of a change confirmation screen; and
FIGS. 10A and 10B illustrate an example of a screen in a case where the maintenance person performs replenishment or collection.

### Description of Embodiments

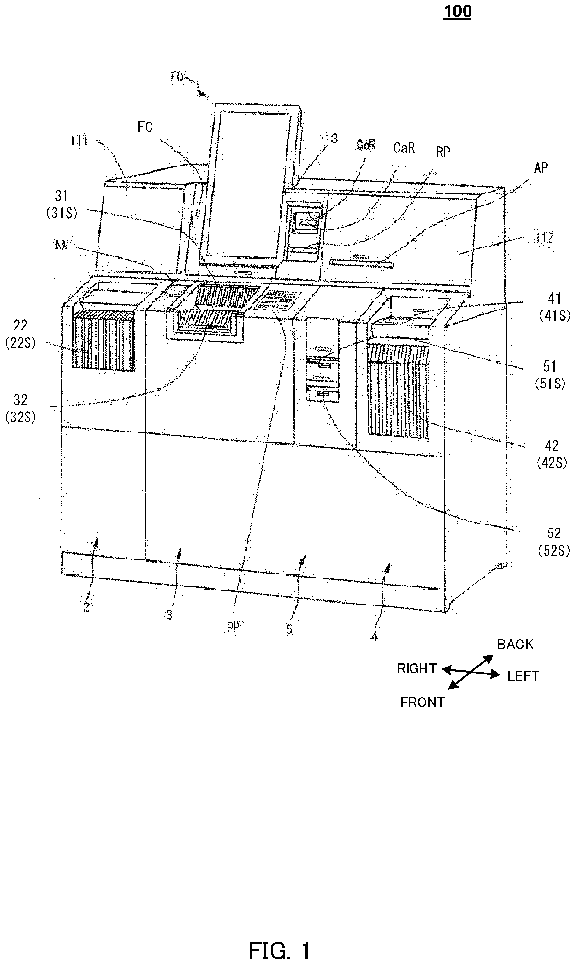

FIG. 1 is an external view of a valuable medium processing apparatus 100 according to an aspect of the present disclosure when viewed from the front side. Note that, FIG. 1 indicates the front, back, left, and right directions with respect to the valuable medium processing apparatus 100, and the description herein will be made based on these directions.

The valuable medium processing apparatus 100 is installed in various kinds of facilities comprising a store (financial store) of a financial institution such as a bank, a store (distribution store) such as a convenience store, or the like. The valuable medium processing apparatus 100 is an apparatus that performs various kinds of processing related to transactions for various kinds of valuable media. As specific examples of the valuable media, banknotes, coins, cheques, and the like can be mentioned, for example. The coins comprise rolled coins and loose coins. The banknotes may comprise bound notes and loose notes. As specific examples of the transaction, depositing, dispensing, money change, transfer, and the like can be mentioned.

The valuable medium processing apparatus 100 comprises: a rolled coin device 2 that performs processing related to a transaction for the rolled coin; a banknote device 3 that performs processing related to a transaction for the loose note; a loose coin device 4 that performs processing related to a transaction for the loose coin; and a cheque device 5 that performs processing related to a transaction for the cheque. The rolled coin device 2, the banknote device 3, the loose coin device 4, and the cheque device 5 are housed in a housing 1 in a state in which the devices are arranged in a line along the left -right direction. In the example indicated in FIG. 1, the rolled coin device 2, the banknote device 3, the cheque device 5, and the loose coin device 4 are disposed in this order from left to right in a case where the valuable medium processing apparatus 100 is viewed from the front side. Further, the valuable medium processing apparatus 100 may also comprise a bound note device that performs processing related to a transaction for the bound note. The bound note device may be disposed between the rolled coin device 2 and the banknote device 3.

With respect to each device, at least one of an inlet and an outlet thereof is provided on the front surface of the housing 1. The rolled coin device 2 comprises an outlet 22 for dispensing a rolled coin. The outlet 22 is provided with a shutter 22S for opening and closing the outlet 22. The banknote device 3 comprises an inlet 31 for receiving a banknote and an outlet 32 for dispensing a banknote. The inlet 31 is provided with a shutter 31S for opening and closing the inlet 31, and the outlet 32 is provided with a shutter 32S for opening and closing the outlet 32. The loose coin device 4 comprises an inlet 41 for receiving a loose coin and an outlet 42 for dispensing a loose coin. The inlet 41 is provided with a shutter 41S for opening and closing the inlet 41, and the outlet 42 is provided with a shutter 42S for opening and closing the outlet 42. The cheque device 5 comprises an inlet 51 for receiving a cheque and an outlet 52 for feeding out a cheque. The inlet 51 is provided with a shutter 51S for opening and closing the inlet 51, and the outlet 52 is provided with a shutter 52S for opening and closing the outlet 52. Note that, the outlet 52 may be an outlet section for returning a cheque inputted through the inlet 51.

Note that, although FIG. 1 indicates an example in which each inlet and each outlet are provided with a shutter, respectively, each inlet and each outlet may not be provided with a shutter in the present disclosure.

Further, the front surface of the housing 1 is provided with a front display FD and a PIN pad PP as one user interface of the valuable medium processing apparatus 100. The front display FD has a structure (a touch screen) in which a touch pad and a thin display are stacked, and is capable of performing various kinds of displaying to the user and receiving an input operation by the user. The PIN pad PP receives an input of a PIN (personal identification number) by the user. The PIN pad PP is, for example, a numeric keypad. The front display FD is an example of the display in the present disclosure. Further, the front display FD and the PIN pad PP are an example of the input device in the present disclosure. The input device may be a device operated by the user, or a communication interface for receiving signals from the outside. Note that, the user in the present embodiment means a person (maintenance person) who performs management and maintenance of the valuable medium processing apparatus 100 and is, for example, an employee or the like of a facility where the valuable medium processing apparatus 100 is installed.

Further, a card reader CaR, a code reader CoR, a receipt printer RP, an A4 printer AP, a front camera FC, and an NFC reader NM are provided on the front surface of the housing 1. The card reader CaR reads an ATM card of a bank account, a credit card, and the like, for example. The code reader CoR reads a barcode, a 2D code, and the like. The receipt printer RP and the A4 printer AP print information on a result of processing performed by the maintenance person using the valuable medium processing apparatus 100, or the like, and provide the maintenance person therewith. The front camera FC photographs the face, iris or the like of the user who utilizes the valuable medium processing apparatus 100 or the maintenance person of the valuable medium processing apparatus 100, and uses the photographed face, iris or the like as part of processing history information. The front camera FC may also be used to generate image data to be utilized for biometric identification of the user or the maintenance person. The NFC reader NM performs communication by NFC (Near Field Communication) with a portable terminal (such as a smartphone and a tablet terminal) of the maintenance person, for example.

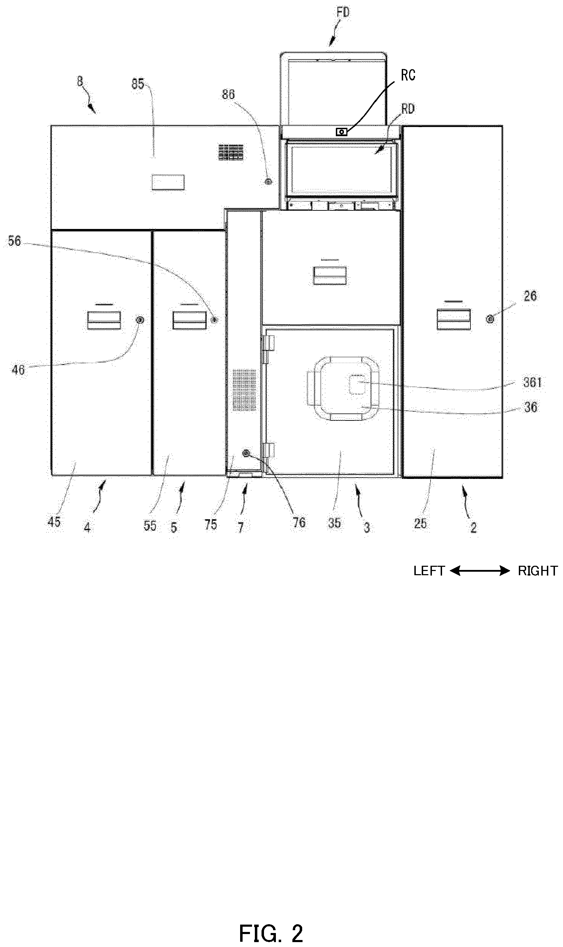

FIG. 2 is an external view of the valuable medium processing apparatus 100 when viewed from the back. A door 25 of the rolled coin device 2, a door 35 of the banknote device 3, a door 45 of the loose coin device 4, and a door 55 of the cheque device 5 are provided on the back surface of the housing 1. These doors 25, 35, 45, and 55 allow the maintenance person or the like of the valuable medium processing apparatus 100 to access the interior of each valuable medium device.

The doors 25, 35, 45, and 55 are lockable by locks 26, 36, 46, and 56. The banknote device 3 may also comprise a key input device 361 for inputting a personal identification number for unlocking the lock 36.

Further, in the example indicated in FIG. 2, a controller box 7 is provide between the banknote device 3 and the cheque device 5. The controller box 7 stores a controller 10 to be described later. The controller box 7 comprises a door 75 and a lock 76.

A peripheral device box 8 is provided on a side above the banknote device 3, the loose coin device 4, and the cheque device 5. The peripheral device box 8 houses main parts of the front display FD, the PIN pad PP, the card reader CaR, the code reader CoR, the receipt printer RP, the A4 printer AP, the front camera FC, the NFC reader NM, and the like that are indicated in FIG. 1. The peripheral device box 8 comprises a door 85 and a lock 86.

Further, a rear display RD is provided as one user interface of the valuable medium processing apparatus 100 on a side above the banknote device 3 on the back surface of the housing 1. In the same manner as the front display FD, the rear display RD has a structure (a touch screen) in which a touch pad and a thin display are stacked. The rear display RD is capable of performing various kinds of displaying to the maintenance person and receiving an input operation by the maintenance person.

Further, a rear camera RC is provided near the rear display RD on the back surface of housing 1. The rear camera RC photographs the face, iris or the like of the maintenance person, and generates image data to be utilized for biometric identification of the maintenance person.

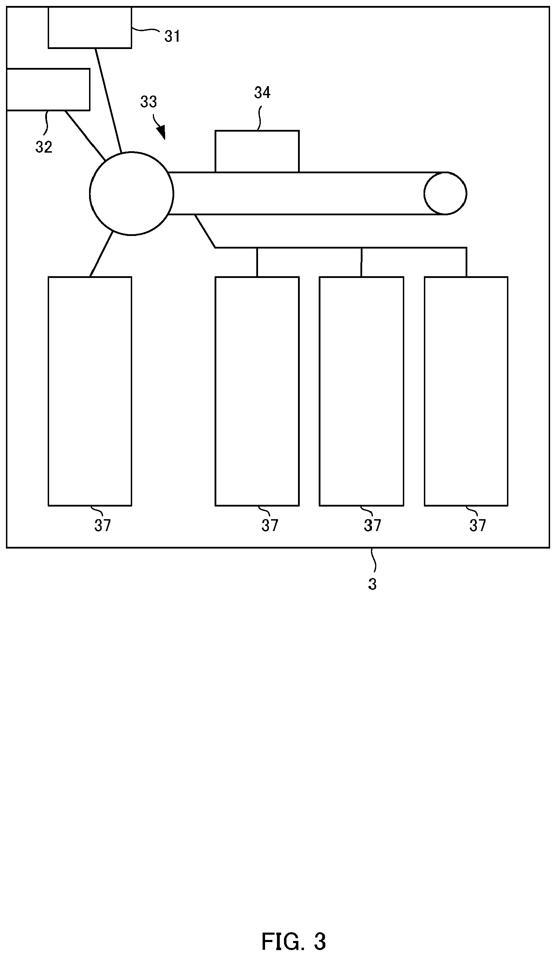

Next, an internal structure of the banknote device 3 will be described as an example of an internal structure of each device of the valuable medium processing apparatus 100. FIG. 3 illustrates the internal structure of the banknote device 3. The banknote device 3 comprises a transport unit 33, a recognition unit 34, and a storage unit 37.

The transport unit 33 transports a banknote among the inlet 31, the outlet 32, and the storage unit 37. The transport unit 33 is formed of, for example, a belt and a roller. A banknote fed out from the inlet 31 is transported by the transport unit 33 to one of the outlet 32 and the storage unit 37.

The recognition unit 34 is disposed near the inlet 31 on the path of the transport unit 33, and recognizes the denomination, fitness, authenticity, and the like of a banknote fed out from the inlet 31.

The storage unit 37 stores a banknote. The storage unit 37 may comprise: a recycle unit configured to be capable of feeding out a banknote that has been stored once; and a collection unit configured to be incapable of feeding out a banknote that has been stored once. Further, the storage unit 37 may also comprise a temporary storage unit capable of feeding out a banknote, which temporarily stores a banknote until processing related to a transaction is completed. In addition, the storage unit 37 may also comprise a plurality of storage boxes, and storage boxes in which banknotes are stored for each denomination may be determined in advance.

The devices other than the banknote device 3, that is, the rolled coin device 2, the loose coin device 4, and the cheque device 5 have the same or a similar internal structure as or to that of the banknote device 3 described above, or have a known internal structure. Accordingly, detailed descriptions of the internal structures of the rolled coin device 2, the loose coin device 4, and the cheque device 5 will be omitted.

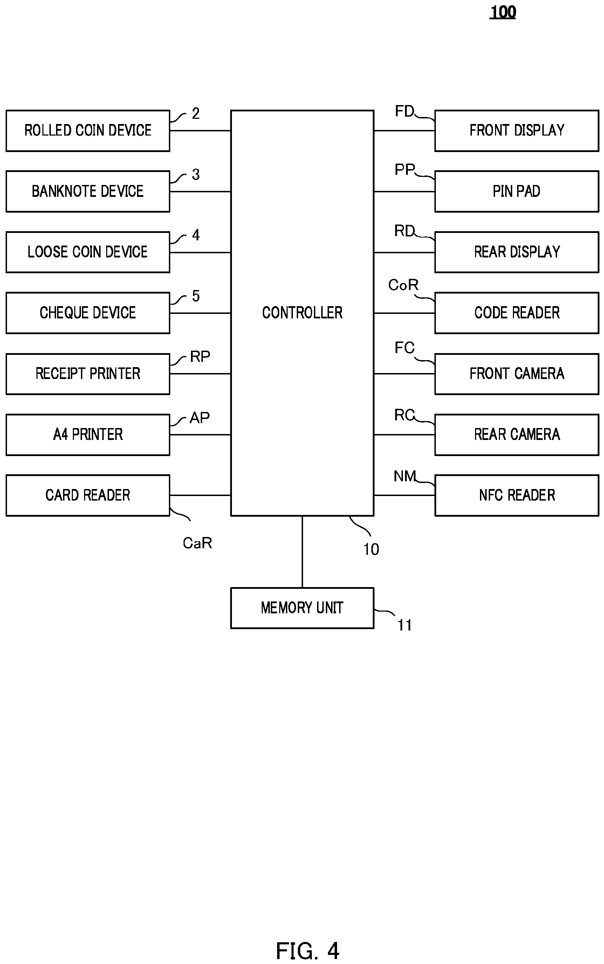

FIG. 4 is a block diagram of the valuable medium processing apparatus 100. The controller 10 controls each configuration of the valuable medium processing apparatus 100. A memory unit 11 stores various kinds of data, programs, and the like that are required for processing to be executed by the controller 10.

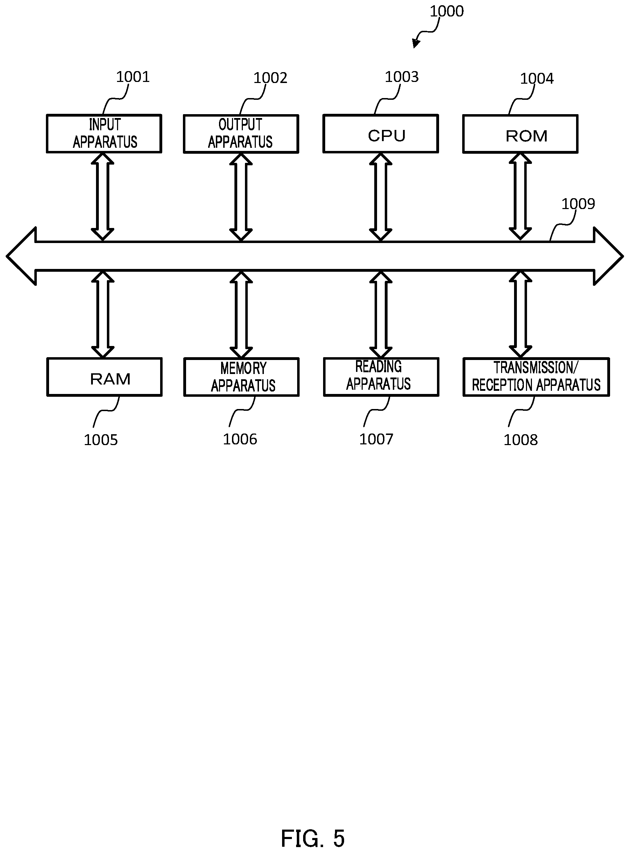

FIG. 5 illustrates an example of a hardware configuration of the valuable medium processing apparatus 100 as a computer.

The computer 1000 comprises an input apparatus 1001, an output apparatus 1002, a CPU 1003, a ROM (Read Only Memory) 1004, a RAM (Random Access Memory) 1005, a memory apparatus 1006, a reading apparatus 1007 for reading information from various kinds of recording media, and a transmission/reception apparatus 1008, and the respective parts are connected by a bus 1009. The front display FD and the PIN pad PP which are indicated in FIG. 1 or the like and the rear display RD indicated in FIG. 2 or the like are examples of the input apparatus 1001. The front display FD and the rear display RD are examples of the output apparatus 1002. The memory unit 11 indicated in FIG. 4 is an example of the memory apparatus 1006.

Then, the reading apparatus 1007 reads a program for implementing the functions of the respective apparatuses described above from a recording medium that records the program, and causes the memory apparatus 1006 to store the program. Alternatively, the transmission/reception apparatus 1008 communicates with a system apparatus connected to a network and causes the memory apparatus 1006 to store a program downloaded from the system apparatus.

Then, the CPU 1003 copies the program stored in the memory apparatus 1006 to the RAM 1005, sequentially reads instructions comprised in the program from the RAM 1005, and executes the instructions, thereby operating each block of the valuable medium processing apparatus 100 indicated in FIG. 4.

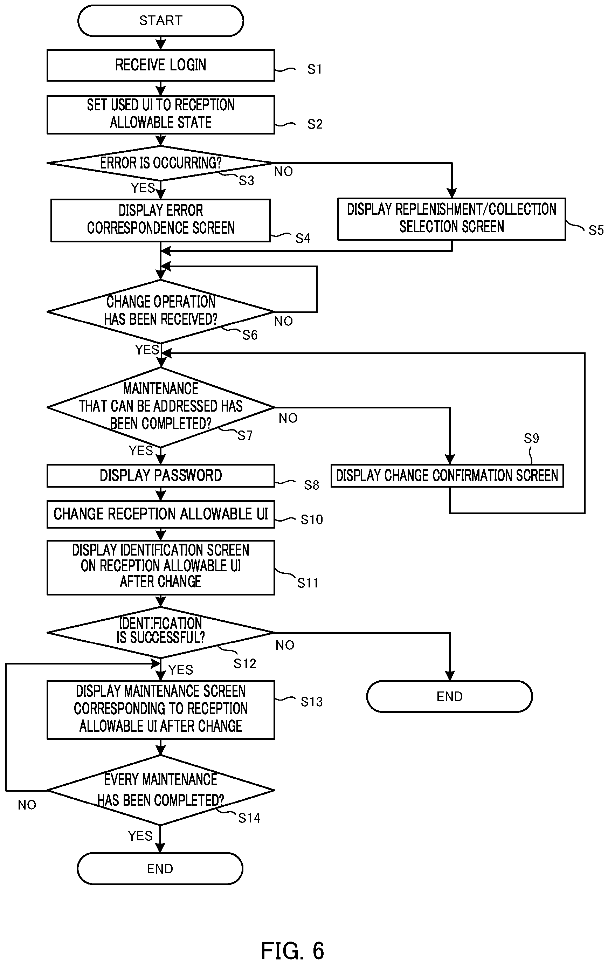

Next, an operation example of the valuable medium processing apparatus 100 will be described. FIG. 6 is a flowchart illustrating an operation example of the valuable medium processing apparatus 100. Note that, details of each screen appearing in the description of FIG. 6 will be described later.

In step S1, the controller 10 receives login by the maintenance person of the valuable medium processing apparatus 100. The login is performed based on, for example, information read by the card reader CaR from a card presented by the maintenance person, information obtained by the front display FD or the PIN pad PP receiving an input operation of identification information (such as a password) by the maintenance person, and the like. The identification information to be used in identification is stored in advance in the memory unit 11, for example. The identification information may be acquired from, for example, an external computer communicably connected to the valuable medium processing apparatus 100, or the like.

Note that, as described above, the valuable medium processing apparatus 100 comprises user interfaces (UI) on the front and back surfaces of the housing 1, respectively. Hereinafter, the front display FD and the PIN pad PP provided on the front surface of the housing 1 will be described as a front UI. Further, the rear display RD provided on the back surface of the housing 1 will be described as a rear UI.

The valuable medium processing apparatus 100 is configured such that when one of the front UI and the rear UI is in a state capable of receiving an operation, the other thereof does not receive an operation. For example, when the front UI is set to be in a state capable of receiving an operation, the rear UI does not receive an operation. Further, when the rear UI is set to be in a state capable of receiving an operation, the front UI does not receive an operation. In the following description, a reception allowable state refers to a UI in a state capable of receiving an operation. Further, a reception unallowable state refers to a UI in a state in which the UI does not receive an operation.

The login in step S1 can be performed at either the front UI or the rear UI.

In step S2, the controller 10 sets, between the front UI and the rear UI, an UI, at which the login has been performed in step S1, to the reception allowable state. That is, in a case where the login in step S1 has been performed at the front UI, the controller 10 sets the front UI to the reception allowable state. In this case, the rear UI is set to the reception unallowable state in which an operation is not received. Note that, as will be described later, the reception allowable state and the reception unallowable state may be changed at each UI based on an operation of the maintenance person or the like. In the following description, a UI in the reception allowable state is described as a reception allowable UI, and a UI in the reception unallowable state is described as a reception unallowable UI.

In step S3, the controller 10 determines whether an error is occurring in any valuable medium device of the valuable medium processing apparatus 100. The error is, for example, a state in which new depositing and dispensing cannot be performed due to a reason that a valuable medium is jammed in an inlet, an outlet, the transport unit, the storage unit, or the like. The error may occur due to a variety of reasons in addition to jamming of a valuable medium.

In a case where the controller 10 has determined in step S3 that an error is occurring (step S3: YES), the controller 10 advances the operation to step S4. Otherwise (step S3: NO), the controller 10 advances the operation to step S5.

In step S4, the controller 10 causes the reception allowable UI to display an error correspondence screen. The error correspondence screen is a screen that displays, for each valuable medium device of the valuable medium processing apparatus 100, a mark indicating that an error is occurring. The error correspondence screen is an example of the maintenance screen of the present disclosure.

Note that, in step S4, while the reception allowable UI displays the error correspondence screen described above, the controller 10 causes the reception unallowable UI to display a reception unallowable screen indicating that an operation is not received.

After step S4, the controller 10 advances the operation to step S6.

In step S5, the controller 10 causes the reception allowable UI to display a replenishment/collection selection screen. The replenishment/collection selection screen is a screen that receives selection of replenishment or collection.

After step S5, the controller 10 advances the operation to step S6.

In step S6, the controller 10 determines whether a change operation has been performed to the reception allowable UI. Details of the change operation will be described later.

In a case where the controller 10 has determined that a change operation has been performed (step S6: YES), the controller 10 advances the operation to step S7. Otherwise (step S6: NO), the controller 10 repeats the operation in step S6. Note that, in a case where maintenance is completed without performing a change operation, the controller 10 may receive an input to complete the maintenance and end the operation of the valuable medium processing apparatus 100.

In step S7, the controller 10 determines whether maintenance of a valuable medium device that can be addressed has been completed. The maintenance of a valuable medium device that can be addressed is error addressing that can be addressed from a side identical to the side of the reception allowable UI, or replenishment or collection. Specifically, for example, in a case where the reception allowable UI is the rear display RD, that is, in a case where the maintenance person is at the back surface, the maintenance of a valuable medium device that can be addressed is error addressing that can be addressed from a side of the back surface, or replenishment or collection from the side of the back surface.

The controller 10 may determine, for example, based on information from each valuable medium device, whether the maintenance of a valuable medium device that can be addressed has been completed.

In a case where the controller 10 has determined that the maintenance of a valuable medium device that can be addressed has been completed (step S7: YES), the controller 10 advances the operation to step S8. Otherwise (step S7: NO), the controller 10 advances the operation to step S9.

In step S8, the controller 10 causes the UI, which has received the change operation, to display a password for identification.

In step S9, the controller 10 causes the reception allowable UI to display a change confirmation screen for confirming the maintenance person whether the reception allowable UI may be changed. The controller 10 may cause the display to display the content of the maintenance of a valuable medium device that can be addressed from the side identical to the side of the reception allowable UI.

In step S10, the controller 10 changes the reception allowable UI. That is, the reception unallowable UI before step S8 is changed to the reception allowable UI after step S10. The reception allowable UI before step S9, on the other hand, is changed to the reception unallowable UI after step S10. At the time of the password displaying in step S8, the UI that has received the change operation may be in the reception unallowable state, but may remain in the reception allowable state in a case where an input for canceling the change operation is allowed.

More specifically, in a case where the reception allowable UI is the rear UI until step S8, the rear UI is changed to the reception unallowable UI and the front UI is changed to the reception allowable UI after step S10. Alternatively, in a case where the reception allowable UI is the front UI until step S8, the front UI is changed to the reception unallowable UI and the rear UI is changed to the reception allowable UI after step S10.

In step S11, the controller 10 causes the reception allowable UI after the change to display an identification screen.

The maintenance person who has moved to a side of the front surface of the valuable medium processing apparatus 100 performs an operation to enter a password via a password displaying screen displayed on the reception allowable UI after the change.

In step S12, the controller 10 determines whether the identification is successful on the identification screen. In a case where the password entered via the password displaying screen displayed on the reception allowable UI after the change coincides with the password displayed on the UI that has received the change operation in step 8, the controller 10 determines that the identification is successful. In a case where the identification is successful (step S12: YES), the controller 10 advances the operation to step S13. Otherwise (step S12: NO), the controller 10 causes every UI to display displaying indicating that the identification has failed, and to end the processing. Alternatively, the controller 10 may cause the reception allowable UI to display a password displaying screen 300 again.

Note that, although the identification has been performed by entering the password displayed on the reception allowable UI before the change via the reception allowable UI after the change in the flowchart indicated in FIG. 6, biometric identification based on, for example, biometric information of the maintenance person, that is, the face, iris, fingerprint, vocal print, or the like may be performed. In this case, the password displaying in step S8 is not necessary. Specifically, the controller 10 acquires the biometric information of the maintenance person instead of causing the password to be displayed in step S8. For example, the rear camera RC is used to photograph the face, iris, or the like of the maintenance person. In step S11, the controller 10 acquires the biometric information of the maintenance person instead of causing the reception allowable UI after the change to display the identification screen. For example, the front camera FC is used to photograph the face, iris, or the like of the maintenance person. In a case where the biometric information acquired by rear camera RC coincides with the biometric information acquired by the front camera FC, the controller 10 determines that the identification is successful.

In step S13, the controller 10 causes a maintenance screen corresponding to the reception allowable UI after the change to be displayed on the reception allowable UI. Specifically, in a case where an error correspondence screen corresponding to the reception allowable UI before the change has been displayed in step S4, the controller 10 causes an error correspondence screen corresponding to the reception allowable UI after the change to be displayed in step S13.

The maintenance person who has looked at the error correspondence screen in step S13 starts to correct the error that should be addressed from a side identical to the side of the reception allowable UI after the change.

In a case where the replenishment/collection selection screen has been displayed in step S5, the controller 10 causes the reception allowable UI after the change to display a replenishment/collection standby screen in step S13.

The maintenance person who has looked at the replenishment/collection standby screen in step S13 starts replenishment or collection to be performed from the side identical to the side of the reception allowable UI after the change.

In step S14, the controller 10 determines whether every maintenance has been completed. The determination whether every maintenance has been completed may be performed based on information from each valuable medium device.

In a case where the controller 10 has determined that every maintenance has been completed (step S14: YES), the controller 10 ends the operation of the valuable medium processing apparatus 100. Specifically, the controller 10 causes the maintenance person to log out and shifts to a standby state for the next operation. Otherwise (step S14: NO), the controller 10 returns to the operation in step S13.

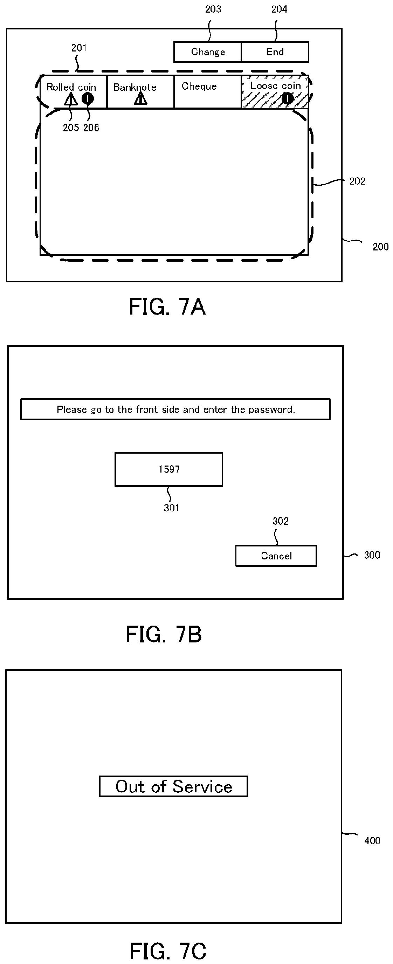

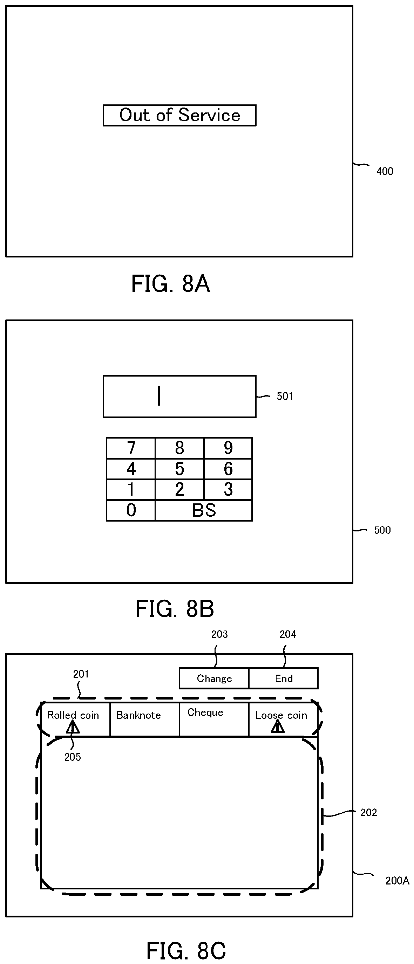

Next, the screen transitions in the valuable medium processing apparatus 100 indicated in FIG. 6 will be specifically described. First, a first case in which the maintenance person logs in by using the rear UI, performs error addressing from the side of the back surface, and then changes the reception allowable UI to the front UI to perform error addressing from the side of the front surface will be described with reference to FIGS. 7A to 7C and 8A to 8C. FIGS. 7A to 7C illustrate screen transitions in the rear UI, and FIGS. 8A to 8C illustrate screen transitions in the front UI.

FIG. 7A illustrates an example of an error correspondence screen 200 that is displayed on the rear UI in step S4 of FIG. 6. The error correspondence screen 200 comprises a device correspondence area 201, a correspondence content displaying area 202, a change button 203, and an end button 204.

The device correspondence area 201 is an area corresponding to the plurality of valuable medium devices of the valuable medium processing apparatus 100, respectively. The device correspondence area 201 comprises a rolled coin area corresponding to the rolled coin device, a banknote area corresponding to the banknote device, a cheque area corresponding to the cheque device, and a loose coin area corresponding to the loose coin device.

Each area comprised in the device correspondence area 201 displays, in a case where an error is occurring in each corresponding valuable medium device, at least one of a first error mark 205 and/or a second error mark 206, both of which indicate that an error is occurring. The first error mark 205 and the second error mark 206 differ in, for example, designs such as colors, shapes, sizes, and the like, and are displayed in an easily distinguishable manner.

The first error mark 205 indicates that an error that should be addressed from, of the housing 1 of the valuable medium processing apparatus 100, a side identical to the side of the reception allowable UI is occurring. The second error mark 206 indicates that an error that should be addressed from a side different from the side of the reception allowable UI is occurring.

In the example indicated in FIG. 7A, the reception allowable UI is the rear UI. Accordingly, the maintenance person who performs an operation to the rear UI is at the back surface of the housing 1 of the valuable medium processing apparatus 100. In this case, the first error mark 205 indicates that an error that can be addressed from the back surface of the housing 1 is occurring. The error that can be addressed from the back surface of the housing 1 is, for example, an error that can be corrected by the maintenance person by opening one of the doors 25, 35, 45, and 55 of the respective valuable medium devices indicated in FIG. 2.

Further, the second error mark 206 indicates that an error that cannot be addressed from the back surface of the housing 1 is occurring. The error that cannot be addressed from the back surface of the housing 1 is, for example, an error that can be corrected by the maintenance person by opening the shutters of the respective valuable medium devices indicated in FIG. 1.

By looking at the error correspondence screen on which the first error mark 205 and the second error mark 206 are displayed, the maintenance person can realize at a glance an error that can be addressed from, of the housing 1 of the valuable medium processing apparatus 100, a side on which the maintenance person is currently present, and an error that cannot be addressed from the side on which the maintenance person is currently present (an error that requires movement of the maintenance person).

In the example indicated in FIGS. 7A to 7C, in the device correspondence area 201, the area corresponding to the rolled coin device 2 displays both the first error mark 205 and the second error mark 206, the area corresponding to the banknote device 3 only displays the first error mark 205, and the area corresponding to the loose coin device 4 only displays the second error mark 206.

In this case, the maintenance person who has looked at the error correspondence screen 200 can realize that both an error that can be addressed from the side of the back surface and an error that cannot be addressed from the side of the back surface are occurring in the rolled coin device 2. Further, the maintenance person who has looked at the error correspondence screen 200 can realize that only an error that can be addressed from the side of the back surface is occurring in the banknote device 3. Further, the maintenance person who has looked at the error correspondence screen 200 can realize that no error is occurring in the cheque device 5. Further, the maintenance person who has looked at the error correspondence screen 200 can realize that only an error that cannot be addressed from the side of the back surface is occurring in the loose coin device 4.

The maintenance person who has looked at the error correspondence screen 200 as such can first start to correct the errors that should be addressed from the side of the back surface. The maintenance person who has corrected the errors that should be addressed from the side identical to the side of the reception allowable UI performs an operation to the change button 203 and changes the reception allowable UI. This operation to the change button 203 is the change operation in step S6 of FIG. 6.

The change button 203 is an operation button for changing a UI in the reception allowable state. When the maintenance person performs an operation to the change button 203, the current reception allowable UI is changed to the reception unallowable UI and the current reception unallowable UI is changed to the reception allowable UI. In the example indicated in FIG. 7A, a change operation to the change button 203 is performed, and thus, the reception allowable UI is changed from the rear UI to the front UI.

The end button 204 is an operation button for ending displaying of the error correspondence screen 200. When the maintenance person performs an operation to the end button 204, the displaying of the error correspondence screen 200 ends. Thereafter, for example, a screen indicating that an error is occurring, or the like, may be displayed on the front UI and the rear UI.

The correspondence content displaying area 202 is an area in which displays associated with the respective device correspondence areas are performed. Specifically, the correspondence content displaying area 202 displays information, such as a method for correcting an error in a valuable medium device corresponding to a device correspondence area selected by an operation of the maintenance person, in characters, drawings, moving images, or the like. In the example indicated in FIG. 7A, the correspondence content displaying area 202 is associated with the area corresponding to the rolled coin device 2 (in a state in which the border between the area corresponding to the rolled coin device 2 and the correspondence content displaying area 202 has disappeared), and information for correcting the error occurring in the rolled coin device 2 is displayed.

On the error correspondence screen 200 indicated in FIG. 7A, the device correspondence area 201 corresponding to the loose coin device 4 is displayed with a color different (hatched in FIG. 7A) from those of the device correspondence area 201 corresponding to other valuable medium devices. This indicates that the inventory amount of the loose coin device 4 is uncertain. A valuable medium device whose inventory amount is uncertain requires reconciliation after the error is corrected and before the valuable medium device is operated again, and the maintenance person can realize at a glance by the error correspondence screen 200 whether reconciliation of each valuable medium device is required.

The maintenance person who has completed every error addressing on the side of the back surface performs an operation to the change button 203 on the error correspondence screen 200 indicated in FIG. 7A, and thus, the displaying of the rear UI transitions to the password displaying screen 300 indicated in FIG. 7B. The password displaying screen 300 comprises a password displaying column 301 and a cancel button 302. Thus, the maintenance person can know a password that should be entered on an identification screen displayed on the front UI when the maintenance person moves to the side of the front surface. Note that, in a case where the maintenance person has performed an operation to the cancel button 302, the change of the reception allowable UI is canceled and the displaying of the rear UI is returned to the error correspondence screen 200 indicated in FIG. 7A.

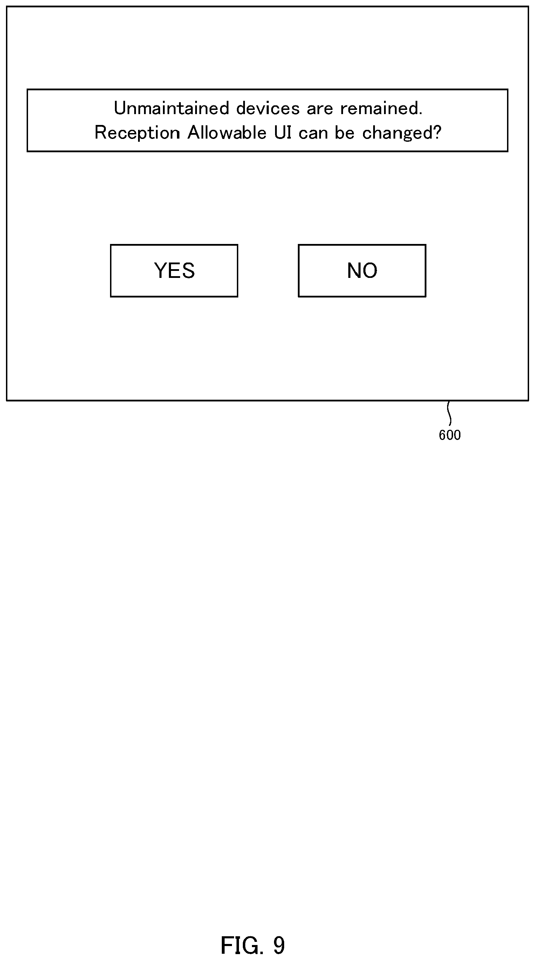

Note that, in a case where every error addressing on the side of the back surface has not been completed when the maintenance person performs an operation to the change button 203 on the error correspondence screen 200, a change confirmation screen indicated in FIG. 9 is displayed. At this time, information indicating the content of error addressing corresponding that has not been completed may be displayed.

Thereafter, the displaying of the rear UI transitions to a reception unallowable screen 400 indicated in FIG. 7C.

On the other hand, the screen transitions in the front UI are as follows. While the reception allowable UI is the rear UI, that is, while the error correspondence screen 200 indicated in FIG. 7A is displayed on the rear UI, the front UI is in the reception unallowable state. For this reason, the front UI displays the reception unallowable screen 400 as indicated in FIG. 8A. The reception unallowable screen 400 indicated in FIG. 8A is the same screen as the reception unallowable screen 400 indicated in FIG. 7C.

When the change button 203 is operated on the error correspondence screen 200 indicated in FIG. 7A, the displaying of the front UI transitions to an identification screen 500 indicated in FIG. 8B. The identification screen 500 is a screen on which the maintenance person who has looked at the password displayed on the password displaying screen 300 indicated in FIG. 7B enters the password after moving to the side of the front surface of the valuable medium processing apparatus 100. The identification screen 500 comprises an entry area 501 for entering a password. Note that, in a case where the cancel button 302 has not been pressed for a predetermined time in a state in which the rear UI displays the password displaying screen 300 indicated in FIG. 7B, the rear UI may be changed to the reception unallowable state and the front UI may be changed to the reception allowable state.

When the identification is successful at the front UI, the displaying of the front UI transitions to an error correspondence screen 200A indicated in FIG. 8C. In a case where the maintenance person has completed maintenance from the side of the back surface and has moved to the side of the front surface, the error correspondence screen 200A indicated in FIG. 8C only displays the first error mark 205 that should be addressed from the side of the front surface, without the second error mark 206 that should be addressed from the side of the back surface. The maintenance person who has looked at this can realize the error that should be addressed from the side of the front surface.

Next, a second case in which the maintenance person logs in by using the front UI, performs error addressing from the side of the front surface, and then changes the reception allowable UI to the rear UI to perform error addressing from the side of the back surface will be described. Note that, screen transitions in the front UI in the second case are the same as the screen transitions in the rear UI in the first case described with reference to FIGS. 7A to 7C. Further, the screen transitions in the rear UI in the second case are the same as the screen transitions in the front UI in the second case described with reference to FIGS. 8A to 8C.

The operation of the valuable medium processing apparatus 100 in the second case differs from that in the first case in the following point.

In the second case, when the maintenance person completes error addressing from the side of the front surface and moves to the side of the back surface, the password displaying screen may not be displayed on the front UI and the identification screen may not be displayed on the rear UI. That is, the front UI may be caused to display the reception unallowable screen and the rear UI may be caused to display the error correspondence screen on the condition that the change button 203 is operated on the front UI. A general user may not be allowed to access the back surface of the apparatus. In this case, it is possible to reduce the identification-related burden of the maintenance person.

As illustrated in FIG. 1, each inlet and each outlet of each valuable medium device is provided with a shutter, respectively. These shutters may be open while the maintenance person is performing error addressing from the side of the front surface.

When the maintenance person completes the error addressing from the side of the front surface and moves to the side of the back surface, it is better to close the shutters from a security point of view.

Accordingly, in the second case, when the maintenance person completes error addressing from the side of the front surface and performs an operation to the change button on the error correspondence screen (see FIG. 7A) displayed on the front UI, the valuable medium processing apparatus 100 performs control of closing every shutter automatically. Then, in a case where the valuable medium processing apparatus 100 has confirmed that every shutter has been closed, the front UI is caused to display the password displaying screen (see FIG. 7B) and the rear UI is caused to display the identification screen (see FIG. 8B). Thus, it is possible to prevent a situation in which the maintenance person moves from the side of the front surface to the side of the back surface in a state in which the shutters are open.

Here, in a case where the valuable medium processing apparatus 100 can confirm, after performing the control of closing every shutter automatically, that a shutter remains open, the valuable medium processing apparatus 100 notifies the maintenance person by using the front UI. The valuable medium processing apparatus 100 may perform control for correcting a shutter closing abnormality occurring in a shutter automatically.

In a case where the valuable medium processing apparatus 100 can confirm, after performing the control of closing every shutter automatically, that a shutter remains open, the valuable medium processing apparatus 100 may not cause the front UI to display the password displaying screen, but may cause the front UI to perform displaying indicating that the shutter is not closed.

In a case where the valuable medium processing apparatus 100 can confirm that every shutter has been closed, the valuable medium processing apparatus 100 may not cause the front UI to display the password displaying screen and may not cause the rear UI to the identification screen, but may cause the front UI to display the reception unallowable screen and may cause the rear UI to display the error correspondence screen. Thus, it is possible to reduce the identification-related burden of the maintenance person by using, instead of identification, the fact that the shutters have been closed.

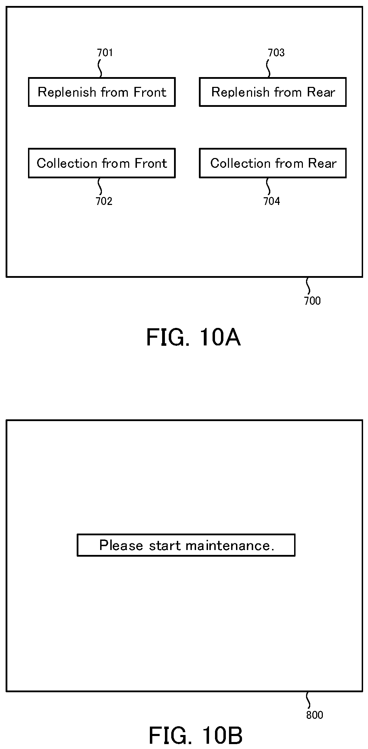

Next, screen transitions in a third case in which the maintenance person who has logged in by using the front UI or the rear UI performs replenishment or collection will be described with reference to FIGS. 10A and 10B.

In a case where the maintenance person performs replenishment or collection, the UI that is set to the reception allowable UI at the time of login displays a replenishment/collection selection screen 700 indicated in FIG. 10A and the UI that is not set to the reception allowable UI at the time of login displays the reception unallowable screen 400 indicated in FIG. 7C or the like.

The replenishment/collection selection screen 700 comprises four selection buttons 701 to 704. The selection button 701 is an operation button for selecting replenishment from the side of the front surface. The selection button 702 is a button for selecting collection from the side of the front surface. The selection button 703 is a button for selecting replenishment from the side of the back surface. The selection button 704 is a button for selecting collection from the side of the back surface.

For example, in a case where the reception allowable UI at the time of login is the rear UI, that is, in a case where the maintenance person is at the back surface of the housing 1 of the valuable medium processing apparatus 100, the maintenance person cannot perform replenishment or collection from the side of the front surface unless the maintenance person moves to the side of the front surface. Accordingly, in a case where, on the replenishment/collection selection screen 700, the maintenance person who is present on the side of the back surface wishes to perform replenishment or collection from the side of the front surface, it is necessary to change the reception allowable UI.

On the replenishment/collection selection screen 700, an operation to a selection button for selecting replenishment or collection from a side different from a side of the current reception allowable UI is the change operation indicated in step S6 of FIG. 6. Specifically, in a case where the reception allowable UI is the rear UI, the change operation on the replenishment/collection selection screen 700 is an operation to the selection button 701 for selecting replenishment from the side of the front surface or an operation to the selection button 702 for selecting collection from the side of the front surface. Further, in a case where the reception allowable UI is the front UI, the change operation on the replenishment/collection selection screen 700 is an operation to the selection button 703 for selecting replenishment from the side of the back surface or an operation to the selection button 704 for selecting collection from the side of the back surface.

When a change operation is performed on the replenishment/collection selection screen 700, the UI that is set to the reception allowable UI at the time of login displays the password displaying screen 300 indicated in FIG. 7B and the UI that is not set to the reception allowable UI at the time of login displays the identification screen 500 indicated in FIG. 8B. Thereafter, the UI that is set to the reception allowable UI at the time of login displays the reception unallowable screen 400 indicated in FIG. 7C or the like. The UI that is not set to the reception allowable UI at the time of login displays, on the other hand, a replenishment/collection standby screen 800 indicated in FIG. 10B. Thus, the maintenance person who has changed the reception allowable UI can perform replenishment or collection from the opposite side.

As described above, the valuable medium processing apparatus 100 according to an aspect of the present disclosure comprises a plurality of user interfaces and, in a case where a change operation for changing a user interface in a reception allowable state is performed to a first user interface in an operation reception allowable state, changes a second user surface in a reception unallowable state to the reception allowable state. At this time, the user interface in the reception allowable state is caused to display a maintenance screen related to maintenance of a plurality of maintenance objects.

Such a configuration enables the maintenance person who performs maintenance in the valuable medium processing apparatus 100 comprising a plurality of maintenance objects (valuable medium devices), which should be maintained from a plurality of sides different from each other, to change, in a case where the maintenance person performs the maintenance that should be addressed from a side on which the maintenance person is not present, a user interface in the reception allowable state to a user interface on a side on which the maintenance person is currently not present, by performing the change operation.

The user interface that has received the change operation is caused to display identification information and the user interface newly changed to the reception allowable state is caused to display an identification screen for inputting the identification information. Accordingly, it is possible to prevent a person other than the maintenance person from performing an operation via the user interface in the reception allowable state after the user interface in the reception allowable state is changed. Thus, the security during maintenance improves.

In a case where maintenance that should be addressed from a side on which the maintenance person is currently present has not been completed when the maintenance person performs the change operation, notification by a notification screen is performed. Thus, the person who performs the notification can prevent a situation in which a user interface on a different side is changed to an operation reception allowable state before the maintenance that should be addressed is completed.

Further, the valuable medium processing apparatus in the present disclosure may also comprise more user interfaces.

In a case where the valuable medium processing apparatus comprises three or more user interfaces, a user interface in a reception allowable state may be changed to at least one user interface other than the user interface currently in the reception allowable state based on a change operation.

## Claims

1. A valuable medium processing apparatus, comprising:
a plurality of user interfaces each of which comprises a display and an input device;
a plurality of maintenance objects; and
a controller which
sets, among the plurality of user interfaces, at least one user interface to a reception allowable state in which reception of an operation to the input device is allowable,
causes the at least one user interface in the reception allowable state to display a maintenance screen related to maintenance of the plurality of maintenance objects,
sets, among the plurality of user interfaces, a user interface different from the at least one user interface in the reception allowable state to a reception unallowable state in which the operation to the input device is not received, and
changes, in a case where the at least one user interface in the reception allowable state receives a change operation for changing the user interface in the reception unallowable state to the reception allowable state, the user interface in the reception unallowable state to the reception allowable state.

2. The valuable medium processing apparatus according to claim 1, wherein in a case where the at least one user interface in the reception allowable state receives the change operation, the controller changes the at least one user interface having received the change operation to the reception unallowable state.

3. The valuable medium processing apparatus according to claim 1 or 2, wherein the controller performs identification of a user on the user interface which has been changed from the reception unallowable state to the reception allowable state, the user performing the operation.

4. The valuable medium processing apparatus according to any one of claims 1 to 3, wherein in a case where the at least one user interface in the reception allowable state receives the change operation, the controller causes the at least one user interface having received the change operation to display identification information for the identification.

5. The valuable medium processing apparatus according to claim 3, further comprising a biometric information acquisition unit that acquires biometric information of the user, wherein
the controller performs the identification based on the biometric information.

6. The valuable medium processing apparatus according to any one of claims 1 to 5, wherein:
the maintenance is error releasing processing on an error that occurs in the plurality of maintenance objects, and
the controller causes a mark to be displayed in the maintenance screen for each of the plurality of maintenance objects, the mark indicating error occurrence.

7. The valuable medium processing apparatus according to claim 6, wherein:
the at least one user interface in the reception allowable state and the user interface in the reception unallowable state are disposed respectively on sides of the valuable medium processing apparatus, the sides being different from each other, and
the controller causes the maintenance screen to display a plurality of the marks in distinction from each other, one mark of the plurality of the marks indicating that an error to be released from a side identical to the side of the at least one user interface in the reception allowable state occurs, another mark of the plurality of the marks indicating that an error to be released from a side identical to the side of the user interface in the reception unallowable state occurs.

8. The valuable medium processing apparatus according to claim 6 or 7, wherein the controller causes the plurality of the marks for each of the plurality of maintenance objects to be displayed on a plurality of displaying areas assigned for each of the plurality of maintenance objects.

9. The valuable medium processing apparatus according to claim 8, wherein in a case where an operation corresponding to one of the plurality of displaying areas is received, the controller causes information to be displayed in the maintenance screen, the information being related to the error releasing processing of one of the plurality of maintenance objects to which the one of the plurality of displaying areas is assigned.

10. The valuable medium processing apparatus according to any one of claims 6 to 9, wherein when the at least one user interface in the reception allowable state receives the change operation, the controller causes the at least one user interface having received the change operation to perform notification in a case where the error releasing processing on an error has not been completed, the error being an error to be released from a side identical to the side of the at least one user interface having received the change operation.

11. The valuable medium processing apparatus according to any one of claims 1 to 10, further comprising a plurality of valuable medium devices each of which handles a valuable medium, wherein
in a case where an inventory amount of one of the plurality of valuable medium devices becomes uncertain, the controller causes displaying to be performed in the maintenance screen, the displaying indicating the one of the plurality of valuable medium devices in which the inventory amount becomes uncertain.

12. The valuable medium processing apparatus according to any one of claims 1 to 11, further comprising a plurality of valuable medium devices each of which handles a valuable medium, wherein:
the plurality of maintenance objects is the plurality of valuable medium devices, and
the controller causes the maintenance screen to display a plurality of options of selecting replenishment or collection of the valuable medium to be performed from the plurality of valuable medium devices.

13. The valuable medium processing apparatus according to claim 12, wherein:
the replenishment or the collection of the valuable medium is performable from sides of the valuable medium processing apparatus, the sides being different from each other and
the controller causes the maintenance screen to display a plurality of options of selecting from which of the sides of the valuable medium processing apparatus the replenishment or the collection is performed.

14. The valuable medium processing apparatus according to any one of claims 1 to 13, further comprising a first valuable medium device and a second valuable medium device, the first valuable medium device handling a first valuable medium, the second valuable medium device handling a second valuable medium whose kind is different from a kind of the first valuable medium, wherein
the plurality of maintenance objects comprises the first valuable medium device and the second valuable medium device.

15. A processing method by a valuable medium processing apparatus comprising:
a plurality of user interfaces each of which comprises a display and an input device;
a plurality of maintenance objects; and
a controller which controls the plurality of user interfaces;
the processing method comprising:
setting, among the plurality of user interfaces, at least one user interface to a reception allowable state in which reception of an operation to the input device is allowable;
setting, among the plurality of user interfaces, a user interface different from the at least one user interface in the reception allowable state to a reception unallowable state in which the operation to the input device is not received;
changing, in a case where a change operation for changing the user interface in the reception unallowable state to the reception allowable state is received via the at least one user interface in the reception allowable state, the user interface in the reception unallowable state to the reception allowable state; and
causing the at least one user interface in the reception allowable state to display a maintenance screen related to maintenance of the plurality of maintenance objects.
